# EUROPEAN PATENT APPLICATION

(11) **EP 4 811 277 A1**
(43) Date of publication of application: **23.09.2026**
(21) Application number: 25315081.7
(22) Date of filing: 17.03.2025
(51) Int. Cl.: G06T 7/00

(54) **SYSTEM AND COMPUTER IMPLEMENTED METHOD FOR DETECTING AT LEAST ONE DEFECT IN AN OPTICAL ARTICLE**

(71) Applicant: ESSILOR INTERNATIONAL, 94220 Charenton-Le-Pont (FR)
(72) Inventor: Zenati, Tarek, 94000 CRETEIL (FR)
(74) Representative: Korakis-Ménager, Sophie

(57) **Abstract**

System and computer-implemented method for detecting at least one defect in an optical article. The system is configured to obtain an image of the tested optical article, to input the image into a feature extraction machine learning model, the feature extraction machine learning model being configured to process the image and to output features; and, to input the features into a machine learning classifier, the machine learning classifier having been previously trained with sets of model features of respective model optical articles, the sets of the model features being labelled with an indication of a presence of at least one defect in the respective model optical articles, and the machine learning classifier being made to output an indication of the presence or absence of at least one defect.

## Description

### Technical field

**Various** aspects of this disclosure generally relate to methods and systems for detecting at least one defect in an optical article.

### Background information and prior art

During the different steps of the manufacturing of an optical article, for example an ophthalmic lens, various types of defects may appear.

To detect the defects a cosmetic control of the optical article may be performed. This control may be performed manually by an operator, using for example a neon tube light or an arc lamp.

However, when the cosmetic control is performed manually, the quality and reliability of the detection of defects may depend on the operator realising this detection.

Therefore, there is a need for a method for detecting defects in optical article, in which the reliability of the detection does not depend on the operator.

### Summary

The following presents a simplified summary to provide a basic understanding of various aspects of this disclosure.

One aspect of this disclosure is a system for detecting at least one defect in an optical article. The system is configured to obtain an image of the tested optical article, to input the image into a feature extraction machine learning model, the feature extraction machine learning model being configured to process the image and to output features; and, to input the features into a machine learning classifier, the machine learning classifier having been previously trained with sets of model features of respective model optical articles, the sets of the model features being labelled with an indication of a presence of at least one defect in the respective model optical articles, and the machine learning classifier being made to output an indication of the presence or absence of at least one defect.

Another aspect of this disclosure is a system for training a machine learning model. The machine learning model is configured for detecting at least one defect in a tested optical article, the machine learning model comprising a feature extraction machine learning model and a machine learning classifier. The system is configured to obtain model images of respective model optical articles, the model images being labelled to indicate a presence of at least one defect in the respective model optical articles, to input the model images into the feature extraction machine learning model to obtain respective sets of model features, and to train the machine learning classifier using the sets of the model features and the corresponding labels indicating the presence of at least one defect in the respective model optical articles.

Another aspect of this disclosure is a computer-implemented method for detecting at least one defect in an optical article. The computer-implemented method comprises: obtaining an image of the tested optical article, inputting the image into a feature extraction machine learning model, the feature extraction machine learning model being configured to process the image and to output features; and, inputting the features into a machine learning classifier, the machine learning classifier having been previously trained with sets of model features of respective model optical articles, the sets of the model features being labelled with an indication of a presence of at least one defect in the respective model optical articles, and the machine learning classifier being made to output an indication of the presence or absence of at least one defect.

Another aspect of this disclosure is a computer program comprising instructions which, when the computer program is executed by a computer, cause the computer to carry out a method for detecting at least one defect in an optical article. The method comprises: obtaining an image of the tested optical article, inputting the image into a feature extraction machine learning model, the feature extraction machine learning model being configured to process the image and to output features; and, inputting the features into a machine learning classifier, the machine learning classifier having been previously trained with sets of model features of respective model optical articles, the sets of the model features being labelled with an indication of a presence of at least one defect in the respective model optical articles, and the machine learning classifier being made to output an indication of the presence or absence of at least one defect.

Another aspect of this disclosure is a non-transitory program storage device, readable by a computer, tangibly embodying a program of instructions executable by the computer to perform a method for detecting at least one defect in an optical article. The method comprises: obtaining an image of the tested optical article, inputting the image into a feature extraction machine learning model, the feature extraction machine learning model being configured to process the image and to output features; and, inputting the features into a machine learning classifier, the machine learning classifier having been previously trained with sets of model features of respective model optical articles, the sets of the model features being labelled with an indication of a presence of at least one defect in the respective model optical articles, and the machine learning classifier being made to output an indication of the presence or absence of at least one defect.

### Description of the drawings

For a more complete understanding of the description provided herein and the advantages thereof, reference is now made to the brief descriptions below, taken in connection with the accompanying drawings and detailed description, wherein like reference numerals represent like parts.
Figure 1 represents a system for detecting defects in an optical article.
Figure 2 represents a calculation device.
Figure 3 represents a method for detecting defects in an optical article.
Figure 4 represents a regular VGG16 neural network.
Figure 5 represents a method to train the machine learning model.
Figure 6 represents examples of defects.

### Detailed description of embodiments

The detailed description set forth below in connection with the appended drawings is intended as a description of various possible embodiments and is not intended to represent the only embodiments in which the concepts described herein may be practiced. The detailed description includes specific details for the purpose of providing a thorough understanding of various concepts. However, it will be apparent to those skilled in the art that these concepts may be practiced without these specific details. In some instances, well-known structures and components are shown in block diagram form to avoid obscuring such concepts.

### Description of the system for detecting defects in an optical article

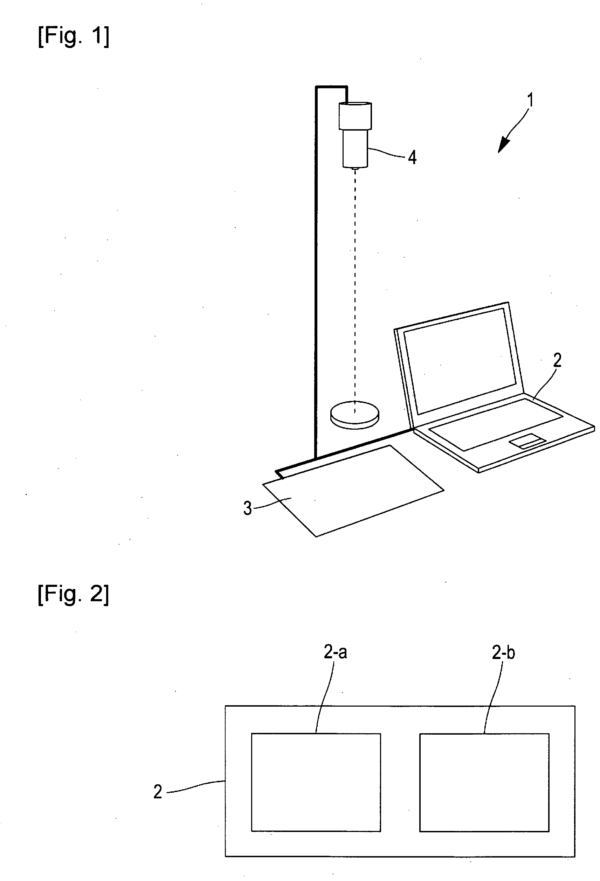

The figure 1 represents a system 1 for detecting defects in an optical article.

The optical article may be integrated or may be intended to be integrated into eyewear.

Eyewear encompasses any type of head mountable devices designed to be worn in or in front at least one eye of a wearer, in any suitable form factor.

Eyewear includes head-mounted display devices (e.g. near eye display devices, augmented reality devices, virtual reality devices or mixed reality devices), helmets (with a visor), eyeglasses, googles, masks, visors, contact lenses, intraocular implants.

The optical article may be an ophthalmic lens.

The ophthalmic lens may be intended to be mounted in a frame of eyewear. The ophthalmic lens may be a semifinished lens, a finished lens, a lens with an optical power corresponding to a prescription, a plano lens without such optical power, a progressive lens, a lens with multiple sub optical elements made for controlling myopia progression, a tinted, polarized or a clear lens.

The detection of the defects may be realised in the entire optical article or only on a part of the optical article. This part may be called the area of interest.

If the optical article is an uncut lens which is to be cut during an edging step to the size and shape of an eyeglass frame, the area of interest may be advantageously a part of the lens intended to be remaining after edging.

If the optical article is a progressive addition lens, the area of interest of the progressive addition lens may comprise at least:
- a far vision control point FV,
- a near vision control point NV,
- a main line M starting from one end of the area of optical interest, ending on the opposite end of the area of optical interest and passing through the far and near vision control points.

The system 1 may comprise a calculation device 2 for detecting the defects in the optical article, a support 3 to support the optical article, and an image acquisition device 4.

The image acquisition device 4 may be configured and positioned, or positionable, to acquire images of the optical article.

The image acquisition device 4 may be a camera.

As presented in figure 2 the calculation device 2 comprises a memory 2-a and a processor 2-b. This calculation device 2 may be a computer, a mobile device like a smartphone or a tablet. The calculation device 2 may also be a virtual machine located on a cloud network or a server not co-located with the user of the system 1.

Examples of processors 2-b include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure.

The memory 2-a may be computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by the processor 2-a of the calculation device 2.

### Description of the method for detecting defects in an optical article

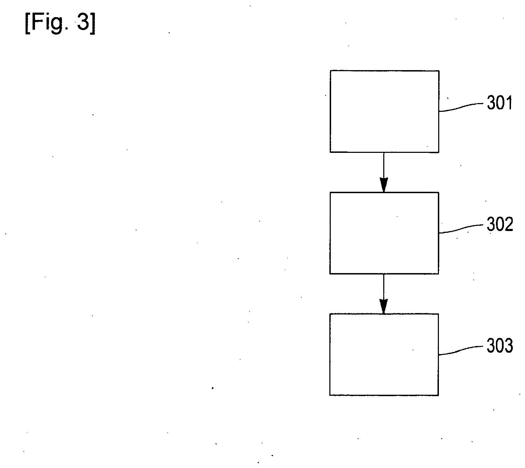

To detect defects in an optical article, the memory 2-a may store a computer program comprising instructions which, when the program is executed by the processor 2-b, cause the calculation device 2 to carry out a method for detecting defects in the optical article, so called tested optical article. This method is represented in figure 3 and comprises:
- a step 301 of obtaining an image of the tested optical article,
- a step 302 of inputting the image into a feature extraction machine learning model, the feature extraction machine learning model being configured to process the image and output features; and,
- a step 303 of inputting the features into a machine learning classifier, the machine learning classifier having been previously trained with sets of model features, the sets being labelled with an indication of the presence of defect.

In this disclosure one may also refer to the combination, of the feature extraction machine learning model and the machine learning classifier, as the machine learning model.

The sets of model features may be obtained by inputting model images of model optical articles in the feature extraction machine learning model. Each set of model features, associated to one of the model optical articles, may be labelled with an indication of a presence of at least one defect in the respective model optical article (i.e. based on whether the model optical article contains a defect).

The image may be obtained by the image acquisition device 4.

The feature extraction machine learning model may be a neural network having been previously trained as a generic image classifier, with its classification layers removed after training.

By features, one means data representing characteristics of the image that is used by a generic image classifier to identify patterns, make predictions, or perform classification. Features represent relevant information extracted from image, allowing the model to classify the images.

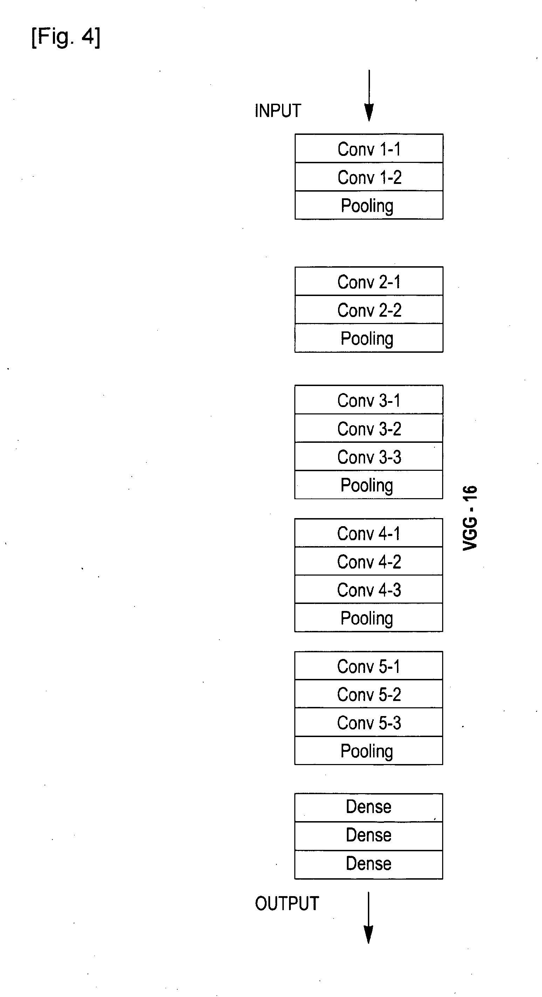

For example, the neural network may be a VGG16 neural network. A regular VGG16 neural network is represented figure 4. On the VGG16 of this disclosure the last layers dedicated to classification have been removed, leaving only the convolutional layers, which act as a feature extractor. The output from the final convolutional or pooling layer, such as Conv5_3 or Pool5, may serve as the extracted features of an input image.

Leveraging a pretrained neural network such as VGG16 enhances feature robustness and reduces the computational cost of training a deep model from scratch. The convolutional layers retain hierarchical representations that can be useful for identifying subtle variations in optical articles, making the approach well-suited for the detection of the defects. The removal of classification layers ensures that the model remains adaptable to different types of optical articles, as it does not rely on fixed output classes.

In run time, the feature extraction machine learning model processes an image of the tested optical article to generate the features, which are then passed to the machine learning classifier. The features may be of the form of a vector. These features contain high-dimensional numerical representations of the image of the tested optical article, encoding distinctive visual patterns learned by the feature extraction machine learning model. Since the classification layers of the neural network, used to realize the feature extraction machine learning model, have been removed, the extracted features are not directly mapped to predefined classes but instead serve as generalized representations of the input image.

The machine learning classifier may be selected among:
- a support vector machine (SVM),
- a random forest,
- a gradient boosting,
- a k-Nearest Neighbours (KNN) classifier, and
- a linear regression.

In other words, to enhance defects detection capabilities, the features extracted by the VGG16 network are passed to the machine learning classifiers.

The support vector machine may be chosen for its ability to handle high-dimensional feature spaces and its effectiveness in finding optimal decision boundaries for classification tasks.

The random forest may be used for its ensemble learning approach, which mitigates overfitting by averaging multiple decision trees, thus improving accuracy and robustness.

The gradient boosting may be chosen for its powerful ensemble technique that builds strong predictive models by sequentially combining weak learners, making it effective for improving classification performance, particularly with imbalanced datasets.

K-Nearest Neighbors classifier may be employed due to its simplicity and non-parametric nature, making it useful for both classification and regression, especially when data relationships are complex and non-linear.

The linear regression may be employed for its simplicity and ability to capture linear relationships between features and the presence of defects and possibly between features and a type of the detected defect.

The images (of the tested optical article or the model optical articles) may be chosen among:
- transmission images,
- polarisation images,
- phase images.

In embodiments, the images may also be fusion images. The fusion images are a combination of the previously cited images.

To obtain these images the support 3 may comprises a display device. The display device may be positioned, or positionable, to face a first side of the optical article and may be configured to illuminate the whole optical article or the area of interest of the optical article according to a plurality of successive specific patterns comprising a bright area and a dark area. The display device may be controlled by the calculation device 2 or another calculation device. This specific pattern may also be a uniform colour covering all or the majority of the display device.

The transmission images are obtained by displaying a uniform colour on the display device, typically white, red, green, or blue and for each colour obtaining a transmission image of the area of interest of the tested optical article or the whole area of the tested optical article using the image acquisition device 4. In our example as four colours are successively displayed by the display device 3, four transmission images are obtained by the image acquisition device 4.

The polarisation image of the tested optical article may be obtained by placing a polarising filter between the display device 3, and the image acquisition device 4.

The polarisation image of the tested optical article may also be obtained by using a display device 3 having a polarized light source to display a white homogeneous pattern, and by placing a polarization filter with the same polarisation axis than the display device 3 between the camera and the lens taking a picture with the image acquisition device 4.

The method of figure 3 may also comprise the determination of a type of the defects.

### Training of the feature extraction machine learning model and the machine learning classifier

The feature extraction machine learning model is trained as a generic image classifier using a dataset of generic model images. These generic model images may be any type of images as long as they are classified in predetermined classes. Training is conducted using a supervised learning approach, where each image is associated with a class, allowing the feature extraction machine learning model to learn discriminative features. The training process involves optimization of the value of the parameters of the feature extraction machine learning model using a loss function, such as categorical cross-entropy, and an optimization algorithm like stochastic gradient descent (SGD) or Adam optimizer.

To adapt the feature extraction machine learning model more precisely to the detection of defects in optical article one may include images of optical articles, classified according to the presence or absence of defects.

When the neural network, used to realize the feature extraction machine learning model is the VGG16, this VGG16 has been pretrained on a large dataset such as ImageNet. This pretrained model captures generic features such as edges, textures, and patterns, making it well-suited for feature extraction. As explained above, after training, the classification layers of VGG16 are removed, leaving only the convolutional layers, which act as a feature extractor. The output from the final convolutional or pooling layer, such as Conv5_3 or Pool5, serves as the extracted feature representation of an input image.

The machine learning classifier is trained to analyse the extracted features and determine the presence of defects in the tested optical article. The machine learning classifier is trained using a dataset of model features, which are features obtained from the feature extraction machine learning model when applied to model images of the model optical articles. Each set of model features, associated to one of the model optical articles, is labelled based on whether the model optical article contains a defect.

The training of the machine learning classifier may be realized using a GPU, for example an Nvidia RTX A2000 with 8GB of memory. The machine learning classifier may be trained using the Adam optimizer with an initial learning rate of 0.001, and training may be carried out for a maximum of 50 epochs or until convergence.

The loss function used to train the machine learning classifier may depend on the type of the machine learning classifier.

One may use a cross-entropy loss for machine learning classifiers that output probabilities (such as logistic regression or random forests with probabilistic outputs). Cross-entropy loss measures the difference between the true label distribution and the predicted probability distribution, making the machine learning classifier to output high probabilities for the correct class.

The cross-entropy loss may be defined as: ${L}_{CE} = - {\sum }_{i = 1}^{N} {y}_{i} log \left({\hat{y}}_{i}\right)$ where:
- *L_{CE}* is the cross-entropy loss,
- *N* is the number of samples in the batch,
- *yᵢ* is the true label for sample i, typically encoded in one-hot format,
- *ŷᵢ* is the predicted probability for sample i, calculated by applying a softmax function to the output of the classifier.

Cross-entropy loss is used for multi-class classification problems, ensuring that the classifier correctly assigns high probabilities to the true class.

For Support Vector Machines (SVM), the hinge loss may be used, as SVMs are based on finding a decision boundary that maximizes the margin between classes. Hinge loss penalizes misclassified samples and encourages the classifier to output a large margin between the decision boundary and the support vectors.

The hinge loss is defined as: ${L}_{hinge} = - {\sum }_{i = 1}^{N} max \left(0.1-{y}_{i}{\hat{y}}_{i}\right)$ Where
- *L_{hinge}* is the hinge loss
- *N* is the number of samples in the batch,
- *yᵢ* is the true label of sample i (typically +1 for the positive class and -1 for the negative class).
- *ŷᵢ* is the predicted decision value for sample i, which is the output of the SVM's decision function.

The hinge loss implies correct classification with a margin, meaning that even correctly classified samples are penalized if they are too close to the decision boundary.

During the training of the machine learning classifier, the loss function (either cross-entropy loss or hinge loss) is optimized, and the values of the parameters of the machine learning classifier are adjusted to minimize the loss.

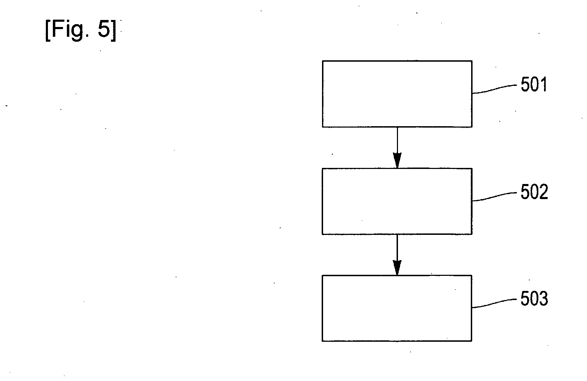

The figure 5 represents a method to train the machine learning classifier. This method comprises:
- a step 501 of obtaining a plurality, for example two, model images of model optical articles, the model images being labelled with label indicating if the model optical articles is with defects or without defect,
- a step 502 of inputting the model images in the feature extraction machine learning model to obtain respective model features of the model images
- a step 503 of training the machine learning classifier using the model features and the labels indicating whether or not the model optical articles comprise defects.

This training may be performed iteratively until the model is accurate enough. As an example, training the model may imply model images associated with hundred model optical articles.

The training of the machine learning classifier may be done using the calculation device 2 or using another calculation device.

The training of the machine learning classifier may be done in one shot or several shots and/or upgraded regularly or at each using.

### Size of the defects

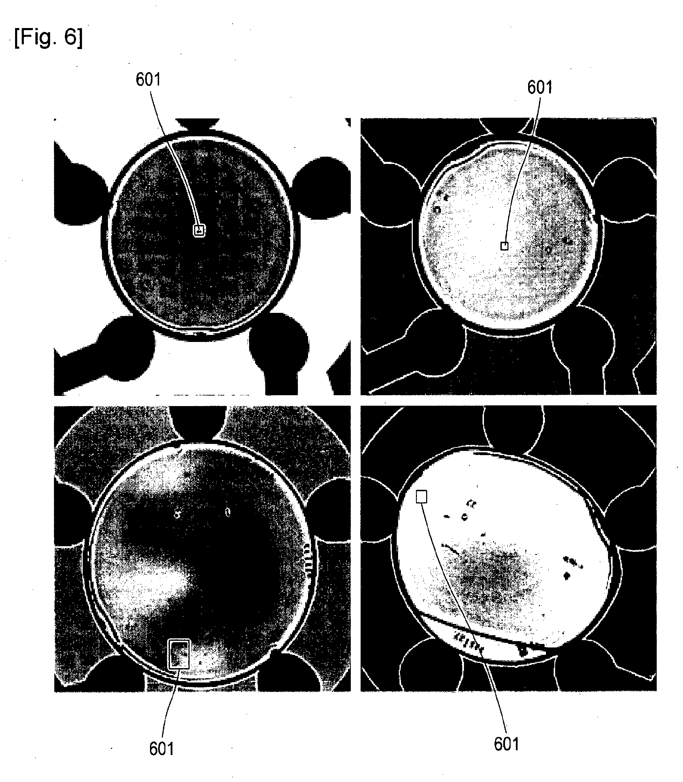

The figure 6 represents example of defects 601. As one may see on the figure 6, the size of the defects is small compared to the size of the optical article.

To take into account the size of the defect one may realize, prior to the steps of figure 3, the following:
- A step of slicing the image of the tested optical article to obtain sub-images, a size of the sub-images being determined based on a size of expected defects,
- A step of inputting the sub-images, instead of the image, in the feature extraction machine learning model.

The expected size and quantity of defects may be determined based on various sources of information:
- historical defect data obtained using the model optical articles,
- predefined lookup tables associated with the tested optical article,
- parameters of a manufacturing process of the tested optical article, or
- defect data from other optical articles previously manufactured using a manufacturing process identical to that used for manufacturing the tested optical article.
Several methodologies may be employed, either independently or in combination, to enhance the determination of the expected size and quantity.

One may access a database of previously observed defects of the model optical articles. This database may include records of defect occurrences over time, along with their measured sizes and quantity. Such data may be used to establish a statistical distribution of expected defect characteristics, allowing the system to predict the most likely defect sizes and their expected number within a given batch. To obtain this data, the model optical articles may be used.

One may determine the expected defects based on predefined lookup tables associated with specific product Stock Keeping Unit (SKUs). These tables, which may be generated from quality control analysis, define expected defect sizes and quantity for each type of optical article. The system can automatically retrieve relevant defect parameters by identifying the SKU of the tested optical article.

The size and quantity of expected defects may also be estimated based on the specific manufacturing process step at which the tested optical article is inspected. Certain defects may be more prevalent at particular stages of production (e.g., polishing, coating, or molding), with distinct defect size distributions. One may also adjust its expected defect size estimation dynamically by considering the current process conditions, such as material properties, environmental factors, or machine settings.

One may also use previously manufactured optical articles, or the model optical articles to determine the expected size and quantity of the defects. In some embodiments the determination may be in real time to adapt the size or quantity of the expected defects during the manufacturing of the optical articles and so adapt during the manufacturing the method for detecting the defects. This has the advantage of allowing an adaptation of the detection of the defects to any shift appearing during the manufacturing process.

One may adapt or select the feature extraction machine learning model and/or the machine learning classifier based on the expected defect size and/or the size of the sub-images to ensure optimal detection. The feature extraction machine learning model and/or the machine learning classifier may be designed to cover a range of expected defect sizes and/or sizes of sub-images, avoiding frequent switching. If the defect size and/or the size of the sub-images remains within this range, the same slicing strategy is applied, allowing the use of the same machine learning model.

Slicing the images may allow the defects to occupy a bigger part of the sub-image, compared to the one occupied in the image. Slicing the images give better performance than increasing the number of pixels of the images. Indeed, increasing the number of pixels may not change the ratio between the number pixels occupied by the defects and the total number of pixels of the image, where slicing the image may increase this ratio by decreasing the total number of pixels of the sub-image.

In other words, the image slicing does not change the size (in pixels) of the defects but strongly modifies the ratio of useful pixels (so ones related to the defects) compared to the background.

In embodiments, the size of the sub-images may be calculated once based on the characterized size of the expected defects. A slicing of the images into sub-images may then be determined based on the determined sub-image size and a size of the tested images. Alternatively, two or more slicing strategies may be predetermined, for example corresponding to two or more predetermined sizes of model sub-images used by two or more existing trained machine learning models, and depending on the calculated sub-image size, a specific one of the two or more slicing strategies and machine learning models may be chosen.

If the size of the expected defects and/or the size of sub-images is outside the predefined range or a threshold value representing the limit, addressable by the current machine learning model, of the size of the expected defects and/or the size of the sub-images has been reached, one may:
- Select another pre-trained machine learning model from a repository, each machine learning model being optimized for different range of defect sizes.
- Adjust the existing machine learning model by fine-tuning it with updated defect data.
- Train a new machine learning model if no suitable one exists, using model optical articles comprising defect matching the new size of the expected defects
- Send an indication to the user that the the size of the expected defects and/or the size of sub-images is not adapted to the current machine learning model.

The transition between machine learning models may be handled seamlessly, either through a gradual deployment mode, a hybrid inference approach, or a real-time confidence adjustment to maintain detection accuracy.

One may label some of the model sub-images with the indication that there is no defect.

The model sub-images may be obtained by slicing model images of the model optical articles. The slicing of the model images may be similar to the slicing of the image of the tested optical article. The model sub-images are also labelled as the model images. The labelling of the model sub-images possibly resulting from the inheritance of the label of the corresponding model image.

The slicing of the image of the tested optical article may be realized so that at least two sub-images overlap, the overlap representing between 5 and 30% of an area of each of the at least two sub-images, more precisely between 10% and 25% of the area of each of the at least two sub-images, for example 20% of the area of each of the at least two sub-images.

The slicing of the model images of the model optical articles may be realized so that at least two model sub-images overlap, the overlap representing between 5 and 30% of an area of each of the at least two model sub-images, more precisely between 10% and 25% of the area of each of the at least two sub-images, for example 20% of the area of each of the at least two sub-images.

Depending on the size of the sub-images, the size of the images and the overlap an oversampling of the images may be required.

The size of the sub-images may be determined based on a characteristic size of the expected defects. The characteristic size of the expected defects may be determined from a subset of the expected defects. The subset may correspond to a predefined percentile (for example 80th percentile) of the expected defects when ranking by increasing size. The characteristic size of the expected defects may be that of the largest defect in the subset.

The size of the expected defects may be obtained using the model optical articles, more precisely the size of the expected defects may be the size of the defects located in the model optical articles.

The sub-images and/or the images may be of different shapes, for example the sub-images and/or the images may be of square shape or rectangular shape.

In embodiments, the size of the expected defects may be different in different areas of the optical article, for example when one might anticipate that a specific process can apply specific defects in specific areas. In this case the size of the sub-images may also be adapted to the area of the optical article. For example, for areas where the size of the expected defects is smaller one may use smaller sub-images and for areas where the size of the expected defects is bigger one may use bigger sub-images.

The size of the sub-images may be determined using the following formula: $S = \sqrt{P \times P \times R}$ Where:
- S is a characteristic length of the sub-images,
- P is a characteristic length of the of the image and,
- R is a ratio between the maximum size, among a proportion of the smallest defects, and the size of the image.

By the size of the image, one means the area of the image.

When the image and/or the sub-images are of square shape, the characteristic length, may be the length of the square.

When the image and/or the sub-images are of rectangular shape, the characteristic length, may be the length of the rectangle, the width of the rectangle or the diagonal of the rectangle.

When using the previously presented formula all the sub-images may have the same length.

In some embodiments the size obtained using the formula may be used directly or may be adapted to the needs of the feature extraction machine learning model and/or the machine learning classifier. In other words, the size of the sub-images obtained by a first way (for example using the previously presented formula) may be adapted to conform to the slicing strategy. This means that one may then use a size of sub-images slightly different so as to conform with the slicing strategy.

For example, when the size of the images is 1920x1920 and about 80% of the defects occupy an area of maximum 0.5% of our images one may obtained, using the previous formula a size of 135x135. Therefore, if using a neural network accepting images of arbitrary size as long as both sides are a multiple of 32, one may choose a size among the different possible sizes (160, 192, 224, 256, ...).

When the images are sliced in sub-images, the method for decting at least one defect may comprise the concatenation of the sub-images on which the defects have been detect in a single full image. In some embodiments some sub-images do contain any defect, these sub-images, containing no defect, may also concatenated.

### Performances

Several tests have been conducted by the applicant especially regarding the performance of different machine learning classifiers. The tests have been conducted for two classes, optical articles with defects and optical articles without defect.

In a first set of tests accuracy has been tested.

Logistic Regression achieves the highest overall accuracy at 86%, demonstrating consistent performance across both classes.

Gradient Boosting Classifier, SVM, and Random Forest have slightly lower accuracies, ranging between 84% and 85%.

KNN has the lowest accuracy at 80%, indicating its limited ability to generalize to the dataset.

In a second set of tests, precision versus recall trade-off has been tested.

Logistic Regression has a strong balance, with Precision = 0.855 and Recall = 0.92 for the "Without defect" class, resulting in an F1-score = 0.88.

SVM has high precision for the "With defects" class (0.94) but lower recall (0.68), resulting in a reduced F1-score of 0.79. This suggests SVM minimizes false positives but struggles with false negatives for the "With defects" class.

The F1 score is the harmonic mean of precision and recall, balancing both to measure a model's accuracy. It's useful when dealing with imbalanced data, ensuring neither false positives nor false negatives dominate the evaluation.

Random Forest and Gradient Boosting Classifier maintain balanced precision and recall values, achieving F1-scores ranging between 0.78 and 0.87.

In a third set of tests, class-specific performance is assessed. Firstly, for the class without defect. SVM achieves the highest recall (0.97) but lower precision (0.81) compared to Logistic Regression. Logistic Regression and Gradient Boosting Classifier achieve competitive F1-scores of 0.88 and 0.87, respectively.

Secondly, for the class with defects. Logistic Regression achieves the best balance for precision (0.87) and recall (0.78), resulting in an F1-score of 0.82. KNN and Random Forest show reduced performance, with lower recall values (0.69 and 0.71) and F1-scores of 0.74 and 0.78, respectively.

In a fourth set of tests, computational efficiency is determined. Logistic Regression and KNN are the most computationally efficient models, with processing times of 0.09 seconds and 0.05 seconds, respectively. In contrast, Gradient Boosting Classifier requires significantly higher computation time (22.5 seconds) while achieving similar accuracy and F1-scores to Random Forest. SVM and Random Forest exhibit moderate computation times of 0.23 seconds and 1.68 seconds, respectively.

## Claims

1. System (1) for detecting at least one defect in a tested optical article, the system being configured to:
- obtain an image of the tested optical article,
- input the image into a feature extraction machine learning model, the feature extraction machine learning model being configured to process the image and to output features; and,
- input the features into a machine learning classifier, the machine learning classifier having been previously trained with sets of model features of respective model optical articles, the sets of the model features being labelled with an indication of a presence of at least one defect in the respective model optical articles, and the machine learning classifier being made to output an indication of the presence or absence of at least one defect.

2. The system (1) according to claim 1,
the feature extraction machine learning model being a truncated image classifier, formed out of a neural network having been previously trained as a generic image classifier, and classification layers of said neural network having been removed after training.

3. The system (1) according to claim 1 or 2, the machine learning classifier being selected among:
• a support vector machine,
• a random forest,
• a gradient boosting,
• a k-Nearest Neighbours classifier, and
• a linear regression.

4. The system (1) according to any one of the claims 1 to 3,
the system being further configured to determine a type of the at least one detected defect.

5. The system (1) according to any one of the claims 1 to 4,
the sets of the model features being obtained by inputting model images of the respective model optical articles in the feature extraction machine learning model.

6. The system (1) according to any one of the claims 1 to 5,
the system being also configured to
- slice the image of the tested optical article to obtain sub-images, a size of the sub-images being determined based on a size of at least one of expected defects,
- input the sub-images in the feature extraction machine learning model.

7. The system (1) according to claim 6,
the system being also configured to
- slice the model image to obtain model sub-images, a size of the model sub-images being determined based on a size of at least one of the expected defects,
- using the model sub-images to obtain the sets of the model features,
the slicing of the model images being similar to the slicing of the image of the tested optical article.

8. The system (1) according to claim 6 or 7,
the slicing of the image of the tested optical article being realized so that at least two sub-images overlap, the overlap representing between 5 and 30% of an area of each of the at least two sub-images, more precisely between 10% and 25% of the area of each of the at least two sub-images, for example 20% of the area of each of the at least two sub-images and/or
the slicing of the model images of the model optical articles being realized so that at least two model sub-images overlap, the overlap representing between 5 and 30% of an area of each of the at least two model sub-images, more precisely between 10% and 25% of the area of each of the at least two sub-images, for example 20% of the area of each of the at least two sub-images.

9. The system (1) according to any one of the claims 6 to 8,
the system being configured to determine the size of the sub-images and/or the size of the model sub-images based on a characteristic size of the expected defects, the characteristic size of the expected defects being determined from a subset of the expected defects, said subset corresponding to a predefined percentile of the expected defects when ranking by increasing size, and wherein the characteristic size of the expected defects is that of the largest defect in said subset.

10. The system (1) according to claim 9,
the system being configured to determine the size of the sub-images by using the following formula: $S = \sqrt{P \times P \times R}$
where S is a characteristic length of the sub-images,
P is a characteristic length of the of the image and,
R is a ratio between the characteristic size of the expected defects, and the size of the image.

11. The system (1) according to any one of the claims 7 to 10,
the system being configured for detecting that at least one defect is in the tested optical article when in at least of the sub-images at least one defect is detected.

12. The system (1) according to any one of the claims 1 to11,
the optical article is intended for integration into eyewear.

13. System for training a machine learning model, the machine learning model being configured for detecting at least one defect in a tested optical article, the machine learning model comprising a feature extraction machine learning model and a machine learning classifier,
the system being configured to:
• obtain model images of respective model optical articles, the model images being labelled to indicate a presence of at least one defect in the respective model optical articles,
• input the model images into the feature extraction machine learning model to obtain respective sets of model features,
• train the machine learning classifier using the sets of the model features and the corresponding labels indicating the presence of at least one defect in the respective model optical articles.

14. Computer implemented method for detecting at least one defect in a tested optical article, the computer-implemented method comprising:
- obtaining (301) an image of the tested optical article,
- inputting (302) the image into a feature extraction machine learning model, the feature extraction machine learning model being configured to process the image and to output features; and,
- inputting (303) the features into a machine learning classifier, the machine learning classifier having been previously trained with sets of model features of respective model optical articles, the sets of the model features being labelled with an indication of a presence of at least one defect in the respective model optical articles, and the machine learning classifier being made to output an indication of the presence or absence of at least one defect.

15. Computer implemented method for training a machine learning model, the machine learning model being configured for detecting at least one defect in a tested optical article, the computer-implemented method comprising:
• obtaining (501) a plurality model images of model optical articles, the model images being labelled with label indicating if the model optical articles is with defects or without defect,
• inputting (502) the model images in a feature extraction machine learning model to obtain respective model features of the model images
• training (503) the machine learning model using the model features and the labels indicating whether or not the model optical articles comprise defects.
